# FASCICULE DE BREVET EUROPEEN

(11) **EP 1 042 752 B1**
(45) Date de publication et mention de la délivrance du brevet: **01.03.2006**
(21) Numéro de dépôt: 98964533.8
(22) Date de dépôt: 28.12.1998
(51) Int. Cl.: G21C 19/46

(54) **PROCEDE ET DISPOSITIF POUR L'OXYDATION D'UN OU DE PLUSIEURS ACTINIDE/S,STABILISE/S SOUS FORME REDUITE PAR UN OU PLUSIEURS AGENT/S ANTI-NITREUX, EN SOLUTION NITRIQUE CONCENTREE**
VERFAHREN UND VORRICHTUNG ZUM OXIDIEREN EINES ODER MEHRERER MIT NITRID-HEMMENDEN WIRKSTOFFEN IN REDUZIERTER FORM STABILISIERTEN ACTINIDEN, IN EINER KONZENTRIERTEN SALPETERSÄURELÖSUNG
METHOD AND DEVICE FOR OXIDISING ONE OR SEVERAL ACTINIDE/S, STABILISED IN REDUCED FORM WITH ONE OR SEVERAL ANTI-NITROUS AGENT/S, IN CONCENTRATED NITRIC SOLUTION

(30) Priorité: 29.12.1997 FR 9716622
(43) Date de publication de la demande: 11.10.2000
(73) Titulaire: COMMISSARIAT A L'ENERGIE ATOMIQUE, 75015 Paris (FR); COMPAGNIE GENERALE DES MATIERES NUCLEAIRES, 78140 Vélizy-Villacoublay (FR)
(72) Inventeur: MOISY, Philippe, F-30000 Nîmes (FR); CAMES, Béatrice, F-30290 Laudun (FR); BLANC, Pierre, F-30133 Les Angles (FR)
(74) Mandataire: Audier, Philippe André
(86) Numéro de dépôt international: PCT/FR1998/002893
(87) Numéro de publication internationale: WO 1999/034369

(56) Documents cités:
- EP-A- 0 324 862
- FR-A- 2 212 296
- FR-A- 2 556 744
- GB-A- 2 217 732

## Description

### Domaine technique de l'invention

L'invention se rapporte à un procédé d'oxydation d'un ou de plusieurs actinides, stabilisés à un bas degré d'oxydation, c'est-à-dire sous forme réduite, par un ou plusieurs agents anti-nitreux, en solution nitrique concentrée.

L'invention se rapporte également à un dispositif pour la mise en oeuvre de ce procédé.

Dans certains procédés d'extraction pour le retraitement de combustibles nucléaires irradiés, tels que le procédé PUREX, le combustible nucléaire irradié est dissous dans de l'acide nitrique concentré pour former une solution de dissolution de ces combustibles nucléaires irradiés. Ces solutions comprennent des actinides tels que le plutonium, le neptunium et l'uranium.

Ces actinides sont stabilisés sous leur forme réduite, lors de certaines étapes du procédé de retraitement, par des agents anti-nitreux afin de les purifier.

En effet, les solutions nitriques concentrées comprennent de l'acide nitreux qui oxyde rapidement les actinides. Les agents anti-nitreux ont pour rôle de réagir rapidement et avec toute trace d'acide nitreux susceptible d'exister en milieu nitrique concentré, ou au moins d'en limiter la concentration. Ces agents anti-nitreux ont généralement une structure azotée, ce sont par exemple des dérivés de l'hydrazine, de l'hydroxylamine ou de l'urée.

Dans le procédé PUREX, les actinides sont extraits des solutions nitriques concentrées à l'aide d'un solvant d'extraction tel que du tributylphosphate (TBP) qui présente la propriété de fixer sélectivement les actinides en fonction de leur degré d'oxydation, en particulier de fixer sélectivement les actinides à degrés d'oxydation élevés.

Un ajustement de l'acidité de ces solutions d'actinides permet d'optimiser l'extraction ou la désextraction de ces actinides par le TBP.

Pour extraire des actinides initialement stabilisés par des agents anti-nitreux dans des solutions nitriques concentrées à l'aide du TBP, il est donc nécessaire de procéder à l'élimination des agents anti-nitreux, à l'oxydation des actinides, et à l'ajustement de l'acidité de ces solutions.

### Etat de la technique

La purification des actinides, réalisée dans le cadre du retraitement de combustibles irradiés, peut être assurée notamment par l'utilisation judicieuse d'un solvant d'extraction dont l'affinité pour les actinides varie suivant le degré d'oxydation de ces derniers. Le tributylphosphate (TBP) constitue un exemple d'un tel solvant.

Le passage d'un degré d'oxydation d'un actinide à un autre degré d'oxydation de cet actinide peut être réalisé par des réactions d'oxydo-réduction mettant en oeuvre des réactifs minéraux ou organiques.

Classiquement, l'oxydation des actinides stabilisés, en solution nitrique concentrée, est réalisée au moyen d'oxydes d'azote (NOX) qui par adsorption dans l'acide nitrique conduisent à la formation d'acide nitreux. Cet acide nitreux permet l'oxydation des actinides et des agents anti-nitreux de cette solution.

Les NOX sont obtenus notamment par réaction entre de l'acide nitrique concentré et du nitrite de sodium. Pour limiter la quantité d'effluents, radioactifs ou non, et notamment la quantité de nitrates, issus d'un procédé de retraitement des combustibles irradiés, il est possible de recycler l'acide nitrique utilisé, et ainsi de limiter le flux d'entrée d'acide nitrique pour le fonctionnement de ce procédé.

L'ajout de nitrite de sodium pour la production de NOX conduit à une augmentation de la charge saline dans l'acide nitrique, rendant difficile le recyclage de ce dernier.

Le document EP-A-0 324 862 a trait à un procédé et à un dispositif d'oxydation d'actinides, stabilisés par un ou plusieurs agent/s anti-nitreux, présent/s dans une solution nitrique concentrée, le procédé consistant à ; soumettre la solution nitrique d'actinide/s à une électronique dans au moins un compartiment anodique d'un électrolyseur ; soumettre une solution d'acide nitrique (concentrée) à une électrolyse dans au moins un compartiment cathodique de l'électrolyseur ; le compartiment anodique étant isolé du compartiment cathodique au moyen d'un/e séparateur/membrane. Ce document propose en fait une solution destinée à diminuer la corrosion des appareils utilisés dans les dispositifs de retraitement des combustibles nucléaires.

Le document FR-A-2 556 744 a trait à un procédé de réextraction réductive du plutonium à partir d'une solution organique de retraitement dans une solution aqueuse d'acide nitrique utilisant un courant d'électrolyse, la solution aqueuse étant exempte de stabilisant de l'état trivalent réduit du plutonium Pu(III).

Le document FR-A-2 212 296 a trait à un dispositif, convenant à une utilisation industrielle, pour réaliser en une seule étape et en continu la réduction d'actinide/s plutonium et/ou uranium contenu/s dans une phase aqueuse entre des électrodes reliées à une source de courant. Le dispositif comporte un agitateur à ailettes dont les ailettes tournent dans l'espace intérieur de la cathode.

Les problèmes posés dans ces deux derniers documents et les solutions apportées sont différents de ceux relatifs à la présente invention.

### Exposé de l'invention

L'invention a précisément pour objet de fournir un procédé d'oxydation d'un ou de plusieurs actinides stabilisé/s par un ou plusieurs agents anti-nitreux, présent/s dans une solution nitrique concentrée, et d'ajustement du pH de cette solution nitrique.

Le procédé de l'invention consiste à soumettre la solution nitrique d'actinide/s à une électrolyse dans au moins un compartiment anodique d'un électrolyseur de manière à oxyder sélectivement au moins une partie de/des l'agent/s anti-nitreux de cette solution pour obtenir une première solution, à soumettre une solution d'acide nitrique concentrée à une électrolyse dans au moins un compartiment cathodique dudit électrolyseur de manière à former de l'acide nitreux dans cette solution pour obtenir une deuxième solution, et à mélanger ladite première et ladite deuxième solutions, chaque compartiment anodique étant isolé de chaque compartiment cathodique correspondant au moyen d'un séparateur.

Le séparateur est constitué d'un matériau minéral tel que par exemple du verre fritté, une céramique poreuse, de l'alumine frittée, etc... ou organique tel que par exemple du NAFION, du polysulfone, etc.... Il ne doit permettre de préférence qu'un transport d'un courant électrique, c'est-à-dire sans mise en contact d'espèces réactives du compartiment anodique et cathodique.

L'agent anti-nitreux peut être choisi dans le groupé comprenant de l'hydrazine, de l'hydroxylamine, de l'urée, un dérivé de ces composés ou un mélange de ces composés dérivés ou non.

L'actinide peut être choisi dans le groupe comprenant de l'uranium, du neptunium, du plutonium ou un mélange de ceux-ci.

Selon le procédé de l'invention, la partie de l'agent anti-nitreux oxydé peut représenter de 20 à 80% en mole d'agent anti-nitreux, de préférence de 40 à 60% en mole.

Selon le procédé de l'invention, l'électrolyse de la solution nitrique d'actinide/s, l'électrolyse de la solution d'acide nitrique concentrée et le mélange de la première et de la deuxième solutions peuvent être réalisés en continu en alimentant le/s compartiment/s anodique/s et cathodique/s en continu avec la solution nitrique d'actinide, et la solution d'acide nitrique respectivement, et en prélevant en continu à partir des compartiments anodiques et cathodiques respectivement la première et la deuxième solutions de manière à pouvoir les mélanger en continu.

Un exemple de débit d'une solution d'actinide stabilisée en milieu nitrique à travers l'électrolyseur peut être de 1 à 500 l/h, de préférence de 50 à 400 l/h de préférence d'environ 100 l/h à environ 300 l/h.

Un exemple de débit d'une solution d'acide nitrique concentré à travers l'électrolyseur peut être de 1 à 500 l/h, de préférence de 50 à 300 l/h de préférence encore d'environ 15 l/h à environ 200 l/h.

Le mélange des première et deuxième solutions prélevées à partir des compartiments anodique/s et cathodique/s respectivement peut être effectué dans un mélangeur classique de type « parfaitement agité » relié à des moyens de prélèvement desdites solutions dans lesdits compartiments.

Selon le procédé de l'invention, l'électrolyse de l'/des agent/s anti-nitreux dans le/s compartiment/s anodique/s peut entraîner la formation d'un dépôt sur une/des électrode/s de ce/s compartiment/s anodique/s.

L'électrolyse peut alors être effectuée, selon un premier mode de réalisation, par cycles successifs comprenant chacun une première étape d'électrolyse à un potentiel E1 pendant une durée t1, et une deuxième étape d'électrolyse à un potentiel E2 pendant une durée t2, le potentiel E1 étant choisi de manière à oxyder sélectivement l'agent anti-nitreux, le potentiel E2 étant choisi de manière à éliminer le dépôt sur l'/les électrode/s et t1 supérieur ou égal à t2.

Le potentiel E2 est donc choisi en fonction de la nature du dépôt formé sur l'électrode du compartiment anodique (anode).

Selon ce premier mode de réalisation, ou mode potentiostatique, E1 peut avoir une valeur choisie dans l'intervalle allant de 0 à 2 V (ECS) et E2 peut avoir une valeur choisie dans l'intervalle allant de 0 à -2 V/ECS, par rapport à une électrode de référence au calomel saturé, par exemple lorsque les agents anti-nitreux sont ceux précités.

Selon ce premier mode de réalisation, t1 peut avoir une valeur choisie dans l'intervalle allant de 20 à 1200 secondes, et t2 de 5 à 180 secondes.

L'électrolyse sélective d'au moins une partie de l'agent anti-nitreux peut aussi être effectuée selon un deuxième mode de réalisation, lorsqu'elle entraîne la formation d'un dépôt sur une/des électrode/s du/des compartiment/s anodique/s (anode). Selon ce deuxième mode de réalisation, l'électrolyse à l'anode peut être effectuée par cycles successifs comprenant chacun une première étape d'électrolyse à une densité de courant J1 pendant une durée T1, et une deuxième étape d'électrolyse à une densité de courant J2 pendant une durée T2, la densité de courant J1 étant choisie de manière à oxyder sélectivement l'agent anti-nitreux, la densité de courant J2 étant égal à -J1 et T1 supérieur ou égal à T2.

La densité de courant étant ici l'intensité de courant traversant 1 cm² de surface de l'électrode.

La densité de courant anodique traversant le compartiment anodique est choisie en fonction de l'agent anti-nitreux à oxyder.

Selon ce deuxième mode de réalisation, ou mode intensiostatique, J1 peut avoir une valeur choisie dans l'intervalle allant de 1 à 1000 mA/cm², T1 peut avoir une valeur choisie dans l'intervalle allant de 20 à 1200 secondes.

Selon ce deuxième mode de réalisation, une densité de courant JC1 peut être imposée à la cathode pendant la durée T1 et une densité de courant JC2 peut être imposée à la cathode pendant la durée T2 avec JC1=-J1 et JC2=-J2.

La valeur J1 et JC1 peut être choisie afin d'obtenir un rendement de production d'acide nitreux proche de 100% en modulant le rapport de surface entre l'anode et la cathode.

Selon le procédé de l'invention, les électrodes des compartiments anodique et cathodique peuvent être constituées d'un métal choisi dans le groupe comprenant le platine, un alliage de platine/iridium ou un alliage platine/rhodium.

Selon le procédé de l'invention, une fraction de la deuxième solution, c'est-à-dire de la solution d'acide nitrique concentrée qui a été soumise à une électrolyse dans au moins un compartiment cathodique de manière à former de l'acide nitreux, peut être réinjectée dans le compartiment cathodique à la solution d'acide nitrique concentrée à électrolyser.

Cette fraction de la deuxième solution peut représenter d'environ 1 à environ 10% en volume.

Ainsi, l'acide nitreux réinjecté catalyse la réduction électrochimique de l'acide nitrique en acide nitreux, ce qui augmente notablement le rendement de production de l'acide nitreux.

Selon le procédé de l'invention, l'oxydation de l'agent anti-nitreux dans le/s compartiment/s anodique/s et/ou la réduction de l'acide nitrique conduisant à la formation de produits gazeux, l'électrolyseur peut être ventilé de manière à extraire ces produits gazeux dudit électrolyseur.

Selon un mode particulier de réalisation, les gaz extraits du/des compartiment/s cathodique/s sont réinjectés dans la solution d'acide nitrique du/des compartiment/s cathodique/s ou dans le mélange de la première et de la deuxième solutions de manière à catalyser la formation d'acide nitreux. En effet, la réduction de l'acide nitrique concentré dans ce compartiment peut conduire à la formation d'oxyde d'azote, qui est un catalyseur de la formation d'acide nitreux. Ce mode particulier de réalisation permet d'accroître le rendement de préparation de l'acide nitreux.

Le procédé de l'invention présente de nombreux avantages par rapport aux procédés de l'art antérieur, notamment pour la diminution de la quantité d'effluent nitrique généré, et pour l'oxydation sélective des agents anti-nitreux classiquement utilisés pour stabiliser les actinides à un bas degré d'oxydation, en milieu acide nitrique concentré.

Le procédé est très efficace car on peut obtenir une oxydation importante et sélective des agents anti-nitreux en eau et en composés gazeux ne présentant pas de difficulté pour leur gestion à venir, puis une oxydation des actinides.

Cette efficacité est accrue compte tenu de l'utilisation conjointe de l'oxydation obtenue à l'anode et de la réduction réalisée à la cathode qui conduit à la formation d'un produit oxydant.

Le fonctionnement de ce procédé ne nécessite pas l'ajout de réactifs supplémentaires. En effet, l'acide nitrique concentré, qui alimente le compartiment cathodique, correspond à l'acide nitrique utilisé pour acidifier la solution d'actinide quel que soit le procédé d'oxydation mis en oeuvre.

Ce procédé présente un grand intérêt car il est transposable à l'oxydation sélective de nombreux agents anti-nitreux en produits gazeux inertes chimiquement et d'actinides.

La catalyse de la réduction de l'acide nitrique en acide nitreux d'une part en alimentant en partie le compartiment cathodique par de l'acide nitreux issu de ce même compartiment, et d'autre part en imposant une zone de potentiel différente de celle conduisant à la réduction de l'acide nitrique en hydrogène, conduit à augmenter la sécurité de l'installation et permet une production importante d'acide nitreux.

Le procédé de l'invention présente une grande sécurité, car le potentiel énergétique accumulé dans l'électrolyseur est quasi nul, et celui accumulé dans le mélangeur est nettement diminué compte tenu de la diminution importante de la quantité d'agent anti-nitreux à oxyder chimiquement par l'acide nitreux produit à la cathode. En effet, environ 50% de l'agent anti-nitreux est oxydé électrochimiquement lors de l'électrolyse et 50% est oxydé chimiquement après mélange des solutions issues des compartiments anodique et cathodique.

De plus, le procédé de l'invention ne nécessite pas la mise en oeuvre de pression et/ou de températures élevées, ce qui est un atout important à de nombreux égards, tel que la sécurité, la possibilité d'utiliser des installations classiques et la très faible corrosion pour les matériaux utilisés pour l'électrolyseur, qui a pour conséquence une production quasi nulle de déchets solides secondaires.

Le mélangeur et l'électrolyseur sont de conception simple, mettant en jeu essentiellement des flux de matière sous forme liquide, et le procédé peut être mis en oeuvre et contrôlé à distance de façon aisée.

L'invention se rapporte également à un dispositif pour la mise en oeuvre du procédé de l'invention.

Ce dispositif d'oxydation d'au moins un actinide stabilisé sous forme réduite par au moins un agent anti-nitreux, en solution nitrique concentrée comprend un électrolyseur comprenant au moins un compartiment anodique et au moins un compartiment cathodique, chaque compartiment anodique étant isolé de chaque compartiment cathodique correspondant au moyen d'un séparateur.

Le/les compartiment/s anodique/s et cathodique/s peuvent par exemple être munis d'électrodes en platine, en alliage platine rhodium ou en alliage platine-iridium.

Le séparateur est constitué d'un matériau de faible porosité minéral ou organique.

Lorsque le matériau constituant le séparateur est minéral, il peut être choisi parmi du verre fritté, de l'alumine fritté, une céramique poreuse, etc...

Lorsque le matériau constituant le séparateur est organique, il peut être choisi parmi du NAFION, du polyuréthane, etc...

Selon l'invention, le dispositif comprend en outre, des moyens pour alimenter chaque compartiment anodique de l'électrolyseur avec une solution nitrique concentrée d'actinides stabilisés, des moyens pour alimenter, en continu ou non, chaque compartiment cathodique de l'électrolyseur avec une solution d'acide nitrique concentrée, ledit dispositif étant caractérisé en ce qu'il comprend en outre des moyens pour prélever lesdites solutions à partir de chacun de ces compartiments, et au moins un moyen mélangeur pour mélanger ensemble les solutions anodiques et cathodiques prélevées.

Le dispositif selon l'invention peut comprendre en outre des moyens pour réinjecter une fraction de la solution prélevée dans le/s compartiment/s cathodique/s dans laquelle de l'acide nitreux a été formé par électrolyse, dans le/les compartiment/s cathodique/s. Ces moyens peuvent permettre de réinjecter par exemple de 1 à 10% en volume de la solution prélevée.

Selon l'invention, le dispositif peut comprendre en outre des moyens pour ventiler les gaz produits dans l'électrolyseur afin d'évacuer de celui-ci ces gaz formés par l'électrolyse des agents anti-nitreux et de l'acide -nitrique. Les gaz formés à l'anode, dans le compartiment anodique, c'est-à-dire issus de l'oxydation des agents anti-nitreux peuvent être évacués par une conduite et dirigés vers un système d'épuration de gaz. Les gaz formés à la cathode, c'est-à-dire des oxydes d'azote, peuvent être évacués par une conduite et être soit réinjectés dans l'acide nitrique concentré du compartiment cathodique, soit être injectés dans le mélangeur de manière à catalyser la formation d'acide nitreux dans le mélange des solutions prélevées dans le/s compartiment/s anodique/s et cathodique/s. Dans ce dernier cas, le dispositif de l'invention pourra comprendre en outre des moyens pour récupérer les gaz ventilés issus du/des compartiment/s cathodique/s et les conduire dans le mélangeur.

Les moyens pour alimenter les compartiments anodiques et cathodiques, et pour prélever les solutions de ces compartiments sont constitués de conduites et des moyens classiques pour injecter et/ou prélever des solutions d'acide concentré.

Le mélangeur peut être un réacteur chimique de type "parfaitement agité" permettant un temps de séjour suffisant pour la réalisation complète de la réaction.

D'autres caractéristiques et avantages de l'invention apparaîtront mieux à la lecture de la description qui suit, et d'exemples de réalisation donnés bien entendu à titre indicatif et non limitatif, en référence aux dessins annexés.

### Description détaillée de l'invention

On oxyde électrochimiquement dans le(s) compartiment/s anodique/s une partie de l'agent anti-nitreux de la solution nitrique d'actinides stabilisés et on réduit électrochimiquement dans le(s) compartiment/s cathodique/s de l'acide nitrique en acide nitreux, en utilisant de l'acide nitrique concentré et en catalysant cette réaction en introduisant des traces d'acide nitreux dans ce/s compartiment/s cathodique/s. Les traces d'acide nitreux sont introduites par réinjection dans le/s compartiment/s cathodique/s de la solution d'acide nitreux formée dans ce compartiment et/ou par réinjection des gaz extraits du/des compartiment/s cathodique/s.

Le mélange des solutions anodique(s) et cathodiques permet, d'une part de réaliser une oxydation chimique des agents anti-nitreux et des actinides par l'acide nitreux, et d'autre part, de réaliser l'ajustage de l'acidité de la solution d'actinides oxydés formée.

Selon le procédé de l'invention, on oxyde électrochimiquement l'agent anti-nitreux à l'anode et, on évite un dépôt sur cette électrode, ou l'empoisonnement de cette électrode, en effectuant périodiquement une régénération de l'électrode au cours du procédé par application d'un potentiel différent ou par modification du sens de passage du courant traversant la cellule d'électrolyse. Le phénomène d'empoisonnement de l'électrode a été observé dans le cas particulier de l'hydrazine.

Selon le premier mode de réalisation de l'invention, ou mode potentiostatique, on modifie périodiquement le potentiel de l'anode de façon à effectuer des cycles successifs comprenant chacun une première étape d'électrolyse à un potentiel E1 pendant une durée t1 et une deuxième étape d'électrolyse à un potentiel E2 pendant une durée t2.

Dans ce mode de réalisation de l'invention, le potentiel E1 est choisi afin de permettre une oxydation sélective de l'agent anti-nitreux, en produit ne présentant pas de risque pour le bon déroulement des étapes ultérieures du procédé. Pendant l'électrolyse, il se produit un empoisonnement progressif de l'électrode, probablement par formation d'une couche d'oxyde, et pour rendre à cette électrode toute son efficacité, on la régénère en la soumettant à un potentiel E2 pendant une durée t2 généralement plus brève que la durée t1.

Le potentiel E2 est choisi en fonction des produits responsables du dépôt sur l'anode.

Selon le deuxième mode de réalisation du procédé de l'invention, ou mode intensiostatique, on inverse périodiquement le sens du courant anodique dans la cellule de façon à effectuer des cycles successifs comprenant chacun une première période à une densité de courant J1 pendant une durée T1 et une deuxième période avec une densité de courant inversée J2=-J1 pendant une durée T2. Ce second mode de réalisation du procédé est particulièrement avantageux, car il n'est pas limité par la technologie des générateurs utilisés.

Dans ce mode de réalisation, en imposant la densité de courant anodique J1, une densité de courant Jc1 peut être imposée à la cathode, ce qui permet de réaliser la réduction électrochimique de l'acide nitrique en acide nitreux. La densité de courant Jc1 est généralement de signe opposé à J1 et cette valeur sera choisie afin d'obtenir un rendement de production d'acide nitreux proche de 100%, en modulant le rapport de surface entre l'anode et la cathode. De façon similaire, une densité de courant cathodique, de signe opposé, est imposé pendant la durée T2.

La densité de courant anodique traversant la cellule est également choisie en fonction de l'agent anti-nitreux à oxyder.

Dans les deux modes de réalisation de l'invention, on peut utiliser des électrodes de travail en métaux nobles, par exemple en platine, ou en alliage d'iridium ou rhodium, et un électrolyseur à deux compartiments isolés par un séparateur.

Selon le procédé de l'invention, et indépendamment du mode de réalisation de l'électrolyse, une fraction du flux de la solution issue du compartiment cathodique peut être recyclée dans le même compartiment cathodique de façon à catalyser la réduction électrochimique de l'acide nitrique en acide nitreux.

Les volumes des compartiments anodique(s) et cathodique(s) de l'électrolyseur sont choisis en fonction des débits de la solution d'actinide à oxyder et de l'acide nitrique concentré utilisé pour l'acidification de la solution.

Suivant ce procédé, le mélange des première/s et deuxième/s solutions issues respectivement des compartiments anodique/s et cathodique/s conduit, d'une part à poursuivre l'oxydation de l'agent anti-nitreux et de l'actinide, et d'autre part à l'ajustement du pH de la solution.

Compte tenu de la formation de produits gazeux (N₂, N₂O, etc...) lors de l'oxydation des agents anti-nitreux tels que des composés dérivés de l'hydrazine, de l'hydroxylamine, de l'urée, etc..., il peut être important de procéder à une ventilation de l'électrolyseur. En effet, cette ventilation permet d'éviter des risques d'explosion induits par la présence potentielle d'hydrogène et d'oxygène.

Quel que soit le mode de réalisation de l'invention, les gaz issus du compartiment cathodique, constitués notamment d'oxyde d'azote, peuvent être utilisés de façon à obtenir un rendement de production d'acide nitreux maximum, permettant de poursuivre l'oxydation chimique de l'agent anti-nitreux, par exemple de l'hydrazine après le mélange des première/s et deuxième/s solutions précitées. Après cheminement des gaz hors du/des compartiment/s cathodique/s, les gaz peuvent être dirigés dans le mélangeur où l'oxydation de l'agent nitreux et de l'/des actinide/s est réalisée chimiquement par l'acide nitreux.

Pour mettre en oeuvre le procédé de l'invention, on opère de préférence à la pression atmosphérique et à la température ambiante, mais on peut utiliser également des températures ou des pressions supérieures ou inférieures.

De préférence selon le procédé de l'invention, on utilise un électrolyseur et un mélangeur capables de fonctionner comme un réacteur continu, pour assurer l'oxydation des agents anti-nitreux par électrolyse, puis par voie chimique par l'acide nitreux dans le mélangeur.

Suivant le procédé de l'invention, on peut oxyder des actinides tels que U (IV), Np (IV) et Pu (III) et des agents anti-nitreux, tels que l'hydrazine, de l'hydroxylamine, de l'urée, un dérivé de ces agents ou un mélange de ces agents et/ou de leurs dérivés.

Les équations correspondant à l'oxydation des divers solutés selon le procédé de l'invention sont les suivantes :

### Processus électrochimiques dans l'électrolyseur Hydrazine

A l'anode N₂H₅⁺ ⇄ N₂+5H⁺+4e⁻

### Hydroxylamine

A l'anode NH₃OH⁺ ⇄ 1/2N₂O+1/2H₂O+3H⁺+2e⁻

### Urée

A l'anode (NH₂)₂CO+H₂O ⇄ CO₂+N₂+6H⁺+6e⁻

### Acide nitrique

A la cathode HNO₃+2H⁺+2e⁻ ⇄ HNO₂+H₂O

### Réactions chimiques dans le mélangeur Hydrazine

N₂H₅⁺+2HNO₂ ― → N₂+N₂O+H⁺+3H₂O

### Hydroxylamine

NH₃OH⁺+HNO₂ ― → N₂O+2H₂O+H⁺

### Urée

(NH₂) ₂CO+H₂O ― → CO₂+2N₂+3H₂O

### Uranium au degré d'oxydation +4

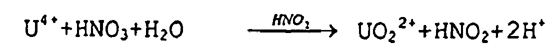

### Neptunium au degré d'oxydation +4

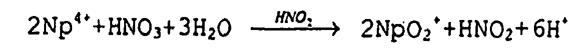

### Plutonium au degré d'oxydation +3

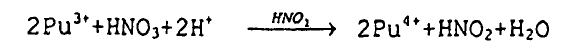

### Bilan de l'oxydation dans l'électrolyseur et le mélangeur

### Hydrazine

N₂H₅NO₃ → N₂+O, 5N₂O+2, 5H₂O

### Hydroxylamine

NH₃OHNO₃ → 3/4N₂O+1/2HNO₃+7/4H₂O

### Urée

(NH₂) ₂CO+1, 5HNO₃ → CO₂+3/2N₂+1/2HNO₂+5/2H₂O

### Uranium au degré d'oxydation +4

U (NO₃) ₄+H₂O → UO₂(NO₃)₂+HNO₂+2HNO₃

### Neptunium au degré d'oxydation +4

Np (NO)₄+1, 5H₂O → NpO₂(NO₃)₂+1/2HNO₂+5/2HNO₃

### Plutonium au degré d'oxydation +3

Pu (NO₃)₃+1, 5HNO₃ → Pu (NO₃)₄+1/2HNO₂+1/2H₂O

### Description des figures

- la figure 1 est une représentation schématique en perspective d'un électrolyseur pour la mise en oeuvre du procédé de l'invention ;
- la figure 2 est une représentation schématique d'un dispositif selon l'invention comprenant un électrolyseur à plusieurs compartiments anodiques et cathodiques pour la mise en oeuvre du procédé de l'invention ;
- la figure 3 est un graphique représentant l'évolution de la quantité d'hydrazine oxydée au cours du temps en fonction de la quantité théorique d'hydrazine oxydée au cours du temps ;
- la figure 4 est un graphique représentant l'évolution de la concentration d'acide nitreux obtenue par réduction d'acide nitrique 6M en mode potentiostatique.

### Exemple 1: dispositifs utilisables pour la mise en oeuvre de l'invention

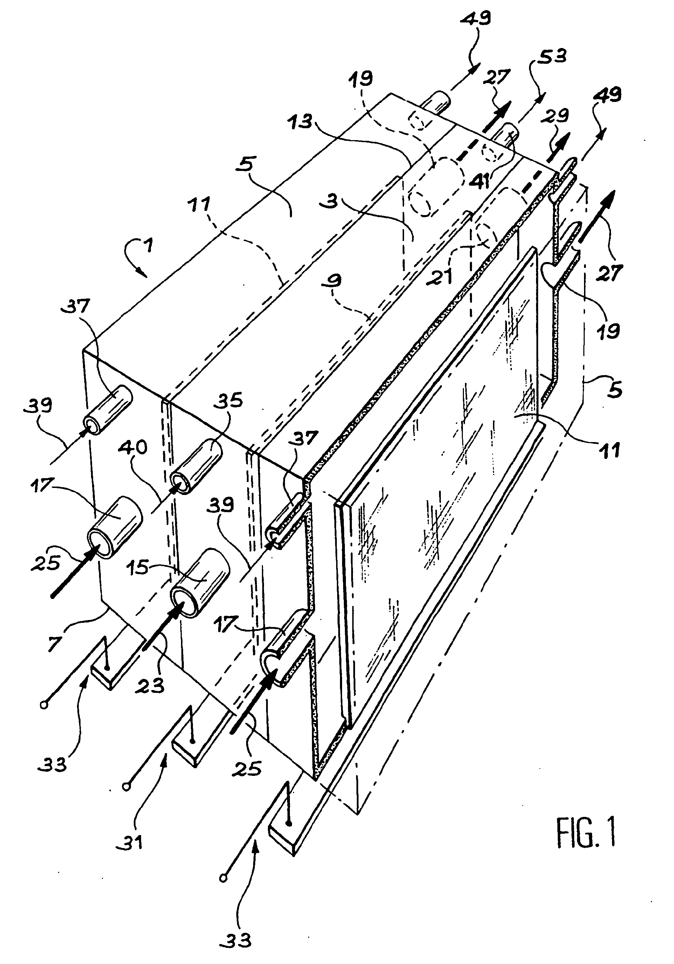

La figure 1 est une représentation schématique en perspective d'un électrolyseur 1 comprenant un compartiment cathodique 3 et deux compartiments anodiques 5.

Cet électrolyseur 1 comprend un fond 7 sur lequel est disposé verticalement une électrode 9 dans le compartiment cathodique 3, et une électrode 11 dans chaque compartiment anodique 11. Les compartiments anodiques 11 sont isolés du compartiment cathodique 9 par un séparateur 13 qui est une paroi de nature minérale (verre fritté, alumine frittée, céramique poreuse, ...) ou organique (NAFION, polysulfone, ...). Ce dispositif peut comprendre également des chicanes non représentées pour permettre de mélanger les solutions électrolysées par exemple au moyen d'un bullage d'argon saturé en eau. Sur ce dispositif, sont prévues des conduites 15 et 17 d'entrée dans l'électrolyseur des solutions d'acide nitrique concentré dans le compartiment cathodique et d'actinide/s stabilisé/s en milieu nitrique concentré dans le compartiment anodique respectivement.

Sont également prévues des conduites 19 et 21 pour prélever les solutions d'acide nitrique concentré électrolysée d'une part à partir du compartiment cathodique, et d'actinide(s) stabilisé(s) en milieu nitrique concentré électrolysée et d'autre part à partir du compartiment anodique respectivement.

Les solutions d'acide nitrique concentré et d'actinides stabilisés en milieu nitrique concentré traversent donc l'électrolyseur 1 de part en part dans le sens indiqué par les flèches 23, 27 et 25, 29 respectivement.

Les solutions prélevées par les conduites 19 et 21 sont dirigées dans un mélangeur non représenté sur la figure 1 pour être mélangées ensembles.

L'électrolyseur 1 décrit comprend également des moyens d'alimentation électrique 31, 33 situés sur le fond 7 de l'électrolyseur de manière à relier l'électrode 9 à l'un des pôles d'un générateur de courant électrique non représenté et les électrodes 11 à l'autre pôle du générateur de courant électrique non représenté.

Dans sa partie supérieure, l'électrolyseur est muni d'un couvercle (non représenté sur la figure 1) créant plusieurs espaces clos au-dessous des compartiments anodiques et cathodiques. Ces espaces sont des espaces de collections des gaz produits lors de l'électrolyse, qui peuvent être ventilés par mise en circulation d'un gaz de balayage introduit par des conduites 35, 37. Le gaz de balayage peut être par exemple de l'azote, de l'argon ou de l'air.

Le sens de circulation des gaz est indiqué par les flèches 39, 49 dans les compartiments anodiques et 40, 53 dans le compartiment cathodique, il est de préférence identique au sens de circulation des solutions dans l'électrolyseur. Le gaz de balayage évacué du compartiment cathodique par une conduite 41 dirigée vers le mélangeur situé en aval de l'électrolyseur.

Ce gaz évacué comprend des oxydes d'azote issus de la réduction électrolytique de l'acide nitrique concentré dans le compartiment cathodique. Il est dirigé vers le mélangeur non représenté sur cette figure 1 et participe à la catalyse de la formation d'acide nitreux supplémentaire dans le mélange de la solution électrolysée d'actinides stabilisés en milieu nitrique et de la solution électrolysée d'acide nitrique concentré.

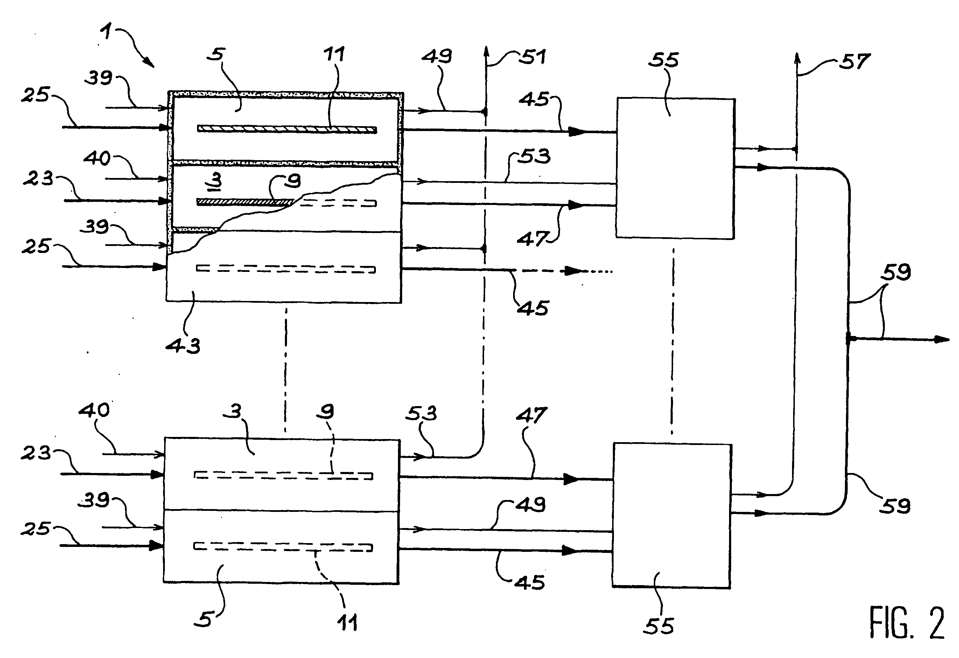

La figure 2 est un schéma illustrant un dispositif comprenant un électrolyseur à plusieurs compartiments anodiques 5 et cathodiques 3, vus du dessus, chacun de ces compartiments comprenant une électrode 11 et 9 respectivement.

Sur ce schéma, un couvercle 43 ferme les compartiments de l'électrolyseur dans leur partie supérieure. Les flèches 23, 25, 29, 39, 40, 45, 49, 47, 51 et 53 indiquent le sens de circulation des fluides liquides et gazeux. Les flèches 25 indiquent le sens d'alimentation des compartiments anodiques par la solution d'actinide stabilisée par un agent anti-nitreux en milieu nitrique concentré, et les flèches 23 indiquent le sens d'alimentation des compartiments anodiques par l'acide nitrique concentré. Les flèches 39 indiquent le sens de circulation du gaz de balayage dans les compartiments anodiques et les flèches 40 dans les compartiments cathodiques. A la sortie des compartiments anodiques et cathodiques des électrolyseurs, les gaz issus des compartiments anodiques 5 indiqués par les flèches 49 sont collectés et dirigés par une conduite 51 vers un traitement d'épuration des gaz, et les gaz issus des compartiments cathodiques 3 sont dirigés vers les mélangeurs 55 par des conduites 53.

La solution issue du compartiment cathodique 3 est dirigée d'une part vers le mélangeur 55 pour la fraction la plus importante, et d'autre part vers l'alimentation du compartiment cathodique dont elle est issue pour la fraction la plus faible.

Le mélangeur 55 est alimenté par les gaz issus des compartiments cathodiques 3 par les conduites 53, par la solution issue des compartiments anodiques 5 et par une fraction importante de la solution issue des compartiments cathodiques 3.

A la sortie du mélangeur 55, une conduite 57 permet l'évacuation des gaz après mélange des solutions, et une conduite 59 permet la collecte et l'évacuation à partir du dispositif de l'invention de la solution d'actinides oxydés et de pH ajusté.

### EXEMPLES

### Exemple 2 : Oxydation électrochimique de l'hydrazine (NH)

Dans cet exemple, on part d'une solution aqueuse d'un volume de 220 ml, contenant 21,6 mmol de NH ayant une concentration en acide nitrique de 1,8 M et une concentration en hydrazine de 0,098 M. On soumet cette solution à une électrolyse dans le compartiment anodique d'un électrolyseur, ou une cellule électrochimique, muni d'un séparateur, pour lequel le compartiment cathodique contient 220 ml d'acide nitrique à une concentration de 1,8 M, comportant pour le compartiment anodique une électrode de travail constituée d'un cylindre de platine d'une surface totale de 60 cm² et une électrode de référence au calomel saturé (ECS) et pour le compartiment cathodique d'un cylindre de platine d'une surface totale de 60 cm².

On réalise l'électrolyse dans un électrolyseur tel que celui décrit sur la figure 1, à la pression atmosphérique et à une température de 20°C, avec une agitation mécanique des solutions en cours d'électrolyse par un bullage d'argon saturé en eau.

En mode potentiostatique, le potentiel de l'anode a été réglé à 0,65 V/ECS, ce qui correspond à un potentiel caractéristique d'un processus d'oxydation de l'hydrazine dans une solution nitrique 1,8 M.

Durant la première heure, le courant circulant dans la cellule d'électrolyse décroît très rapidement pour s'annuler au bout de 30 minutes environ, ce qui montre l'empoisonnement de l'électrode du compartiment anodique qui ne permet pas de réaliser l'oxydation de l'hydrazine de façon satisfaisante. En effet, après une heure d'électrolyse, la mesure par dosage spectrophotométrique de la quantité de NH restant en solution, a montré que la quantité de NH oxydé est très faible.

Dans des conditions chimiques similaires, une électrolyse, en mode potentiostatique, a été réalisée en faisant varier le potentiel imposé à l'anode pour qu'elle fonctionne alternativement à deux potentiels différents E1 pendant une durée t1 et E2 pendant une durée t2 et en répétant ces cycles pendant toute la durée de l'électrolyse.

Les conditions retenues sont les suivantes :
E1=0,65 V/ECS, t1=1200 s
E2=-0,2 V/ECS, t2=20 s.

Le tableau 1 suivant regroupe les valeurs théoriques et expérimentales de la quantité d'hydrazine oxydée suivant un processus d'oxydation sélectif en azote et en eau pendant 130 minutes.

**Tableau 1**

| ^{N}NH théorique (10⁻² mol) | ^{N}NH expérimental (10⁻² mol) |
|---|---|
| 0 | 0 |
| 0,13 | 0,14 |
| 0,26 | 0,25 |
| 0,33 | 0,33 |
| 0,51 | 0,48 |
| 0,79 | 0,78 |
| 1,06 | 1,01 |
| 1,30 | 1,23 |

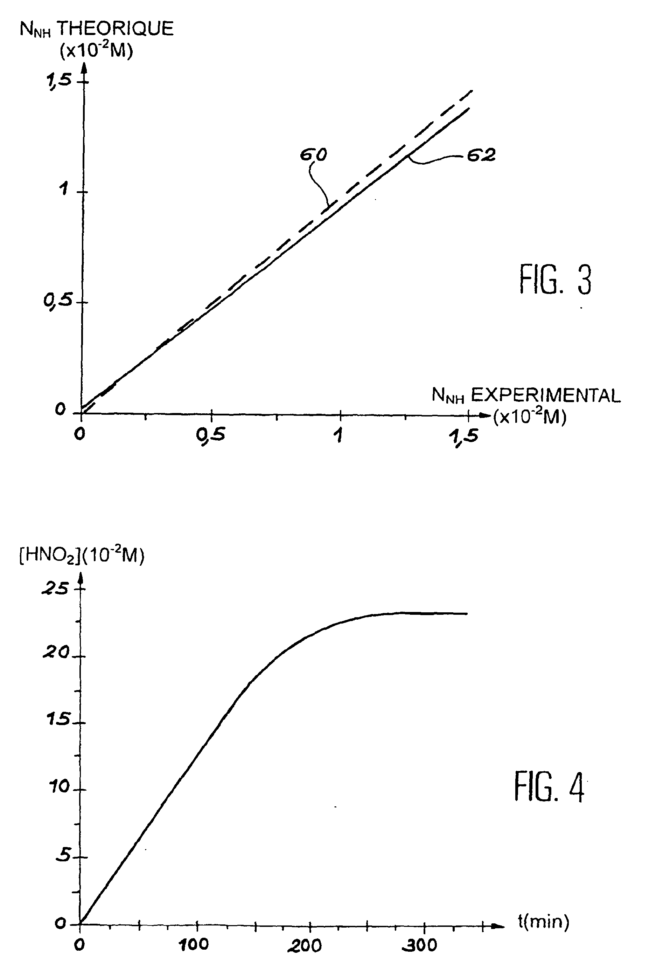

La figure 3 est un graphique représentant l'évolution de la quantité d'hydrazine N_{NH} réellement oxydée en fonction de la quantité théorique d'hydrazine N_{NH} oxydée au cours du temps.

Sur cette figure, on remarque que l'oxydation de l'hydrazine est réalisée suivant un processus à quatre électrons, c'est-à-dire que l'oxydation de l'hydrazine est, d'une part, effective avec un rendement proche de 100%, et d'autre part, qu'elle est sélective, en soumettant l'anode à une succession de cycles de potentiel permettant une dépolarisation de l'électrode.

La faible quantité d'espèces susceptibles de se former lors de l'oxydation de l'hydrazine suivant un processus à un et/ou deux électrons, à savoir l'acide azothydrique et les ions ammonium, mesurée confirme la sélectivité de la réaction d'oxydation électrochimique.

Cet exemple montre donc l'intérêt de procéder à une dépolarisation de l'anode in situ, et au cours de l'électrolyse, afin d'oxyder sélectivement et quantitativement l'hydrazine.

### Exemple 3 : Oxydation de NH/effet du potentiel

Dans cet exemple, on part d'une solution aqueuse ayant la même composition que celle de l'exemple 2 et on réalise son électrolyse comme dans l'exemple 2, mais en soumettant dans un cas l'anode à un potentiel fixe de 0,9 V/ECS pendant toute la durée de l'électrolyse, et dans l'autre cas en faisant varier le potentiel imposé à l'anode pour qu'elle fonctionne alternativement à deux potentiels différents E1 pendant une durée t1 et E2 pendant une durée t2 et en répétant ces cycles pendant toute la durée de l'électrolyse. Les conditions retenues dans cet exemple sont : E1=0,65 V/ECS, t1=1200 s et E2=-0,2 V/ECS, t2=20 s.

De plus, comme dans le cas précédent, on suit, dans le compartiment anodique, à la fois la disparition de l'hydrazine et la production potentielle d'acide azothydrique et d'ion ammonium.

Le tableau 2 ci-dessous montre que l'ordre cinétique de la réaction dépend des conditions d'électrolyse : ordre 0 pour la cinétique observée à l'aide de créneaux de potentiel et ordre 1 pour la cinétique observée au potentiel fixe de 0,9 V/ECS.

Les valeurs des vitesses d'oxydation sont indiquées dans ce tableau à titre indicatif.

Concernant la sélectivité de la réaction d'oxydation électrochimique de l'hydrazine, il apparaît, comme dans le cas précédent, que l'oxydation réalisée avec des créneaux de potentiel est sélective, alors que l'oxydation au potentiel fixe de 0,9 V/ECS, qui conduit à la production d'ions ammonium, met en jeu à la fois un processus à quatre électrons et à un électron.

**Tableau 2**

| | | |
|---|---|---|
| E(V/ECS) | 0,65(t1) et -0,2(t2) | 0,9 |
| Ordre cinétique | 0 | 1 |
| Vitesse | 1,4.10⁻⁴ mol.min⁻¹ | 9,3.10⁻³ min⁻¹ |
| NH₄⁺/NHcons (%) | 1,6 | 23,5 |
| HN₃/NHcons (%) | <7 | <5 |
| n(nombre d'électron) | 3,95 | 3,3 |

| | | |
|---|---|---|
| NHcons(%) correspond à la quantité de NH consommée, ou oxydée, en fonction du temps. | | |

Cet exemple montre que l'oxydation sélective de l'hydrazine sans production d'ions ammonium et d'acide azothydrique n'est possible qu'en mettant en jeu le système électrochimique situé dans la zone de potentiel la plus faible, alors que l'oxydation dans la zone de potentiel la plus positive conduit à une oxydation suivant des processus à un et quatre électrons.

### Exemple 4 : Oxydation de NH/effet de la concentration initiale de NH

Dans cet exemple, on réalise l'électrolyse d'une solution d'hydrazine, en milieu acide nitrique 1,8 M, respectivement à la concentration de 0,16 M et de 0,075 M, dans l'électrolyseur présenté dans l'exemple 2.

Les potentiels E1 et E2 sont respectivement de 0,65 V/ECS et -0,2 V/ECS, pour des durées t1 et t2 respectivement de 120 secondes et 20 secondes.

Les résultats obtenus sont reportés dans le tableau 3. Ils font apparaître que la sélectivité et la cinétique de la réaction d'oxydation électrochimique de l'hydrazine sont indépendantes de la concentration initiale d'hydrazine. Dans les conditions opératoires adoptées, le taux d'oxydation d'hydrazine, à la fin de l'électrolyse était de 43,3% au bout de 53 minutes avec une concentration initiale d'hydrazine de 0,075 M et de 27,1% au bout de 51 minutes pour une concentration initiale d'hydrazine de 0,16 M.

Par ailleurs, l'observation d'une cinétique d'ordre 0 durant la totalité de l'électrolyse, c'est-à-dire jusqu'au taux d'oxydation de 43,3%, confirme d'une part que la cinétique d'oxydation ne dépend pas de la concentration d'hydrazine, et d'autre part, le suivi de la formation éventuelle d'acide azothydrique et d'ions ammonium confirme que la sélectivité ne dépend pas non plus de la concentration d'hydrazine.

**Tableau 3**

| | | |
|---|---|---|
| [NH] initiale (M) | 0, 075 | 0, 16 |
| Ordre cinétique | 0 | 0 |
| Durée d'électrolyse (min.) | 51 | 53 |
| Vitesse (mol. min⁻¹) | 1,4.10⁻¹ | 1,8.10⁻¹ |
| NH₄⁺/NHcons (%) | 1, 6 | 1,0 |
| HN₃/NHcons (%) | <7 | <7 |
| n(nombre d'électron) | 3,95 | 3,95 |

| | | |
|---|---|---|
| NHcons (%) correspond à la quantité de NH consommée, ou oxydée, en fonction du temps. | | |

Cet exemple montre que la cinétique et la sélectivité de la réaction d'oxydation de l'hydrazine ne dépend pas de la concentration initiale ou résiduelle de ce composé au cours du temps.

### Exemple 5 : Oxydation de NH/effet de l'acidité

Cet exemple concerne l'électrolyse d'une solution d'hydrazine ayant une concentration d'environ 0,2 M, en milieu acide nitrique ayant une concentration de 1,8 M et 3,6 M HNO₃, dans l'électrolyseur présenté dans l'exemple 2 et dans les conditions d'électrolyse présentées dans l'exemple 3.

Les résultats obtenus sont reportés dans le tableau 4.

L'absence de modification de la cinétique et de la sélectivité de la réaction d'oxydation de l'hydrazine montre que pour une acidité nitrique comprise entre 1,8 M et 3,6 M. L'oxydation électrochimique de l'hydrazine ne dépend pas de l'acidité de la solution.

De plus, dans les conditions d'électrolyse adoptées, et compte tenu de la nécessité d'oxyder 50% de l'hydrazine électrochimiquement, il est montré que l'électrolyse, pendant une durée de l'ordre de 100 minutes, permet d'oxyder la totalité de l'hydrazine à oxyder, à savoir 40,9% et 55,6% respectivement pour un milieu nitrique ayant une concentration d'acidité de 1,8 M et 3, 6 M.

**Tableau 4 : oxydation de NH/effet de l'acidité**

| | | |
|---|---|---|
| [HNO₃] (M) | 1,8 | 3,6 |
| Ordre cinétique | 0 | 0 |
| Durée d'électrolyse (min.) | 100 | 104 |
| Vitesse (mol.min⁻¹) | 1,8.10⁻⁴ | 2,0.10⁻⁴ |
| NH consommé (%) | 40, 9 | 55,6 |
| NH₄⁺/NHcons (%) | 2,0 | 0,4 |
| NH₃/NHcons (%) | <7 | <7 |
| n (nombre d'électron) | 4 | 4,1 |

| | | |
|---|---|---|
| NHcons (%) correspond à la quantité de NH consommée, ou oxydée, en fonction du temps. | | |

Cet exemple montre que pour une acidité nitrique comprise entre 1,8 M et 3,6 M, l'oxydation électrochimique ne dépend pas de l'acidité.

De plus, cet exemple démontre la possibilité d'oxyder quantitativement l'hydrazine, c'est-à-dire d'obtenir un rendement d'oxydation électrochimique de l'ordre de 50%, les 50% d'hydrazine restant à oxyder dans la solution seront oxydés chimiquement par l'acide nitreux formé à la cathode, après mélange des flux anodiques et cathodiques.

### Exemple 6 : Oxydation de NH/effet du matériau d'électrode

Cet exemple regroupe les résultats obtenus sur différents matériaux d'électrode, en milieu acide nitrique 1,8 M, en présence d'hydrazine initialement à une concentration d'environ 0,2 M et en imposant à l'anode des cycles de potentiel respectivement E1=0,65 V/ECS et E2=-0,2 V/ECS pendant des durées t1 de l'ordre de 2 à 5 minutes et t2 de 20 secondes.

Les résultats illustrant cet exemple sont reportés dans le tableau 5.

Il apparaît que des matériaux d'électrode en platine iridié à 10%, ou en platine rhodié à 5 et 10%, conduisent à des électrolyses pour lesquelles la cinétique et la sélectivité sont peu différentes de celles observées sur platine.

De plus, il a été montré qu'il est possible sans modification de la cinétique et de la sélectivité, d'oxyder de l'ordre de 50% de la quantité d'hydrazine initiale, ce qui correspond à la quantité maximale d'hydrazine à oxyder.

**Tableau 5 : oxydation de NH/effet du matériau d'électrode**

| Matériau d'électrode | PtIr 10% | PtIr 10% | PtRh 10% | PtRh 10% | PtRh 5% | PtRh 5% | PtRh 5% |
|---|---|---|---|---|---|---|---|
| t1 (min) | 5 | 4 | 3 | 4 | 2 | 2 | 3 |
| Vitesse (10⁻⁴mol. min⁻¹) | 1, 8 | 2,1 | 1,5 | 2,4 | 2,7 | 3,1 | 1,3 |
| NH consommé (%) | 63,4 | 57,75 | 57,95 | 18,9 | 44,2 | 52,8 | 49,6 |
| NH₄⁺ /NHcons (%) | <0, 4 | <0, 4 | 2 | 1, 2 | 0, 5 | 0, 7 | 0, 8 |
| n (nombre d'électron) | 4 | 4 | 4 | 4 | 4,1 | 4 | 4 |

| | | | | | | | |
|---|---|---|---|---|---|---|---|
| NHcons (%) correspond à la quantité de NH consommée, ou oxydée, en fonction du temps. | | | | | | | |

Ces résultats montrent que l'utilisation d'une électrode de platine ou d'un alliage de platine/iridium ou de platine/rhodium ne modifie pas le processus d'oxydation de l'hydrazine à l'anode. La sélectivité et la cinétique de la réaction d'oxydation ne dépendent donc pas du matériau d'électrode s'il est constitué de platine ou d'un alliage de métal noble avec du platine, ce qui laisse à penser que l'utilisation d'un matériau peu sensible à la corrosion peut être utilisé sans modification de la réaction d'oxydation.

### Exemple 7 : Réduction électrochimique de l'acide nitrique en acide nitreux

Dans cet exemple, on part de solutions aqueuses d'un volume de 200 ml d'acide nitrique de concentrations 2 M, 4 M et 6 M. On soumet ces solutions successivement à une électrolyse dans le compartiment cathodique d'une cellule électrochimique, munis d'un séparateur, pour laquelle le compartiment anodique contient 200 ml d'acide nitrique à une concentration identique à celle du compartiment cathodique, comportant pour le compartiment cathodique une électrode de travail constituée d'un cylindre de platine d'une surface totale de 60 cm² et une électrode de référence au calomel saturé (ECS), et pour le compartiment anodique d'un cylindre de platine d'une surface totale de 60 cm². On réalise l'électrolyse à la pression atmosphérique et à une température de 20°C, avec une agitation mécanique des solutions soumises en outre à un bullage d'argon saturé en eau. L'électrolyse est effectuée en mode potentiostatique, en imposant à la cathode un potentiel suivant la concentration d'acide nitrique compris entre -0,2 V/ECS et -0,4 V/ECS, ce qui correspond à un potentiel caractéristique de réduction de l'acide nitrique à cette acidité.

Suivant la concentration d'acide nitrique, on voit que la concentration d'acide nitreux, déterminée par dosage spectrophotométrique après formation d'un composé coloré caractéristique de HNO₂, augmente au cours du temps jusqu'à une concentration limite de quelques dizaines de micro-mole par litre. La vitesse de la réaction de production de l'acide nitreux est mesurée pendant la phase d'augmentation de la concentration.

Ces résultats sont regroupés dans le tableau 6, ainsi que les rendements électrochimiques de formation d'acide nitreux calculés pendant la phase d'augmentation de la concentration d'acide nitreux et en considérant un processus de réduction à deux électrons.

**Tableau 6 : réduction électrochimique de l'acide nitrique en acide nitreux**

| | | | |
|---|---|---|---|
| [HNO₃](M) | 2 | 4 | 6 |
| E(V/ECS) | -0,3 | -0,2 | 0,25 |
| Vitesse (10⁻⁴ mol/min) | 0,0001 ± 0,0002 | 0,0005 ± 0,0002 | 0,0014 ± 0,0002 |
| Rendement électrochimique (%) | 0,01 | 0,03 | 0,04 |

Cet exemple montre que la production d'acide nitreux par réduction de l'acide nitrique, dans la zone de potentiel où l'acide nitrique est électroactif, c'est-à-dire inférieure à -0,1 V/ECS, est quasi-nulle pour des concentrations d'acide nitrique inférieure à 6 M.

### Exemple 8 : Réduction électrochimique de l'acide nitrique en acide nitreux/effet catalytique

Dans cet exemple, la cellule d'électrolyse est identique à celle présentée pour l'exemple 7, avec une concentration d'acide nitrique de 6 M. On réalise l'électrolyse en mode potentiostatique, en imposant à la cathode respectivement un potentiel fixe de -0,25 V/ECS, de 0 V/ECS et de 0,5 V/ECS, ce qui correspond respectivement à un potentiel de réduction de l'acide nitrique et à deux potentiels caractéristiques de la réduction catalytique de l'acide nitrique en acide nitreux pour une acidité supérieure à 6 M.

Le tableau 7 regroupe les principaux résultats obtenus dans les conditions de l'exemple 8.

**Tableau 7 : réduction électrochimique de l'acide nitrique en acide nitreux/effet catalytique**

| | | | |
|---|---|---|---|
| E(V/ECS) | -0,25 | 0 | 0,5 |
| Densité de courant (mA/cm²) | -390 | -19,5 | -13,3 |
| Vitesse (10⁻⁴ mol.min⁻¹) | 0,0014±0,0002 | 2,3 | 2,2 |
| Rendement électrochimique (%) | 0,04 | 47 | 48 |

Le suivi au cours du temps de la concentration d'acide nitreux formé, déterminée par dosage spectrophotométrique après formation d'un composé coloré caractéristique de HNO₂, a donné les valeurs présentées dans le tableau 8 suivant.

**Tableau 8 : suivi de la concentration en acide nitreux à E=0 V/ECS et E=0,5 V/ECS**

| | [HNO₃]=6 M E=0 V/ECS | [HNO₃]=6 M E=0,5 V/ECS |
|---|---|---|
| temps (min) | [HNO₂] (10⁻²M) | [HNO₂] (10⁻²M) |
| 0 | 0 | 0 |
| 60 | 7,5 | |
| 80 | | 10 |
| 123 | 14,8 | |
| 155 | | 19,6 |
| 160 | 19, 15 | |
| 210 | 22,05 | |
| 260 | | 22,3 |
| 316 | | 23,5 |

La figure 4 est une représentation graphique des valeurs du tableau 8. Elle montre que la concentration d'acide nitreux augmente au cours du temps jusqu'à une concentration limite de l'ordre de 0,22 M, dans le cas où l'électrolyse est réalisée dans une zone de potentiel où la catalyse de la réaction de réduction est effective. Par ailleurs, une observation visuelle des vapeurs rousses produites lors de ces électrolyses laisse à penser qu'il y a production de vapeurs nitreuses (NOX), conjointement à la formation d'acide nitreux.

La vitesse de la réaction, illustrée notamment par les valeurs élevées de la densité de courant circulant dans la cellule d'électrolyse, ainsi que le rendement électrochimique de production d'acide nitreux, mesurés pendant la phase d'augmentation de la concentration, montrent que la réduction catalytique de l'acide nitrique conduit à la production d'acide nitreux, et probablement de NOX, de façon importante et rapide.

Cet exemple montre que la production d'acide nitreux par réduction catalytique de l'acide nitrique, à une concentration au moins supérieure à 6 M, en imposant des potentiels supérieurs à 0 V/ECS, permet la production d'acide nitreux, et probablement de vapeurs nitreuses, rapidement et en quantité importante.

### Exemple 9 : Réduction électrochimique de l'acide nitrique en acide nitreux/effet de la concentration en acide

Dans cet exemple, la cellule d'électrolyse est identique à celle présentée pour l'exemple 7, avec une concentration d'acide nitrique de 8 M et de 10 M, en imposant à la cathode, en mode potentiostatique, un potentiel fixe de l'ordre de -0,1 V/ECS environ, potentiel pour lequel la catalyse de réduction de l'acide nitrique en acide nitreux est possible.

Le tableau 9 regroupe les principaux résultats obtenus dans les conditions de l'exemple 9.

Comme dans l'exemple .8, l'augmentation de la concentration d'acide nitreux au cours du temps d'électrolyse, et l'observation visuelle des vapeurs rousses produites lors de ces électrolyses laissent à penser qu'il y a production de vapeurs nitreuses (NOX), conjointement à la formation d'acide nitreux. Les valeurs élevées de la vitesse de la réaction et du rendement électrochimique de production d'acide nitreux, montrent que la réduction catalytique de l'acide nitrique conduisant à la production d'acide nitreux, et probablement de NOX, augmente avec la concentration d'acide nitrique. En revanche, l'effet du potentiel sur le rendement électrochimique et la vitesse de réaction, ne semble pas pouvoir être clairement établi à partir de cet exemple.

**Tableau 9**

| | | | |
|---|---|---|---|
| [HNO₃] (M) | 8 | 8 | 10 |
| E (V/ECS) | -0,10 | -0,14 | -0,08 |
| Densité de courant (mA/cm²) | -11,7 | -13,3 | -12,3 |
| Vitesse (10⁻⁴ mol.min) | 3,3 | 4,4 | 5,6 |
| Rendement électrochimique (%) | 70 | 61 | 85 |

Cet exemple montre que la production d'acide nitreux par réduction de l'acide nitrique, et probablement de vapeurs nitreuses, augmente avec la concentration d'acide nitrique.

### Exemple 10 : Réduction électrochimique de l'acide nitrique en acide nitreux/effet du potentiel

Dans cet exemple, la cellule d'électrolyse est identique à celle présentée pour l'exemple 7, avec une concentration d'acide nitrique de 10 M, en imposant à la cathode, en mode potentiostatique, un potentiel fixe de l'ordre de -0,08 V/ECS, 0,5 V/ECS et 0,9 V/ECS qui sont des potentiels pour lesquels la catalyse de réduction de l'acide nitrique en acide nitreux est possible.

Le tableau 10 regroupe les résultats principaux obtenus dans les conditions de l'exemple 10. Si les données reportées dans ce tableau pour les potentiels de -0,08 V/ECS conduisent à une analyse identique des résultats à celles présentées dans les exemples 9 et 10, en revanche, l'observation visuelle de la production de NOX est nettement plus importante dans le cas de l'électrolyse à 0,9 V/ECS. Cette observation qualitative permet de penser que si la vitesse de la réaction et le rendement électrochimique de production d'acide nitreux est plus faible que ceux observés à -0,08 V/ECS et 0,5 V/ECS, en revanche, la production de NOX est plus importante lors de l'électrolyse à 0,9 V/ECS.

**Tableau 10**

| | | | |
|---|---|---|---|
| E (V/ECS) | -0,08 | 0,5 | 0,9 |
| Densité de courant (mA/cm²) | -12,3 | -30 | -0,8 |
| Vitesse (10⁻⁴ mol.min⁻¹) | 5,6 | 4,6 | 0,09 |
| Rendement électrochimique (%) | 85 | 72 | 36 |

Cet exemple montre que la production d'acide nitreux par réduction catalytique de l'acide nitrique, et probablement de vapeurs nitreuses, est possible sur un domaine de potentiel à imposer compris entre environ -0,1 V/ECS et 0,9 V/ECS.

## Revendications

1. Procédé d'oxydation d'un ou de plusieurs actinides, stabilisés par un ou plusieurs agents anti-nitreux, présent/s dans une solution nitrique concentrée, comprenant les étapes consistant à :
- soumettre la solution nitrique d'actinide(s) à une électrolyse dans au moins un compartiment anodique d'un électrolyseur de manière à oxyder sélectivement au moins une partie de l'agent anti-nitreux de cette solution pour obtenir une première solution,
- soumettre une solution d'acide nitrique concentrée à une électrolyse dans au moins un compartiment cathodique dudit électrolyseur de manière à former de l'acide nitreux dans cette solution pour obtenir une deuxième solution, puis
- mélanger ladite première et ladite deuxième solutions au moyen d'un mélangeur,
chaque compartiment anodique étant isolé de chaque compartiment cathodique correspondant au moyen d'un séparateur.

2. Procédé selon la revendication 1, dans lequel l'électrolyse de la solution nitrique d'actinide/s, l'électrolyse de la solution d'acide nitrique concentrée et le mélange de la première et de la deuxième solutions sont réalisés en continu en alimentant les compartiments anodique(s) et cathodique (s) en continu avec la solution nitrique d'actinide/s, et la solution d'acide nitrique respectivement, et en prélevant en continu à partir des compartiments anodique/s et cathodique/s respectivement la première et la deuxième solutions de manière à pouvoir les mélanger ensemble en continu.

3. Procédé selon la revendication 1 ou 2, dans lequel l'électrolyse sélective d'au moins une partie de l'agent anti-nitreux dans le compartiment anodique entraînant une formation d'un dépôt sur une (des) électrode(s) de ce (ces) compartiment(s), l'électrolyse est effectuée par cycles successifs comprenant chacun une première étape d'électrolyse à un potentiel E1 pendant une durée t1, et une deuxième étape d'électrolyse à un potentiel E2 pendant une durée t2, le potentiel E1 étant choisi de manière à oxyder sélectivement l'agent anti-nitreux, le potentiel E2 étant choisi de manière à éliminer le dépôt sur les/l'électrode/s et t1 supérieur ou égal à t2.

4. Procédé selon la revendication 3, dans lequel E1 a une valeur choisie dans l'intervalle allant de 0 à 2 V et E2 a une valeur choisie dans l'intervalle allant de 0 à -2 V par rapport à une électrode de référence au calomel saturé.

5. Procédé selon la revendication 3 ou 4, dans lequel t1 est de 20 à 1200 secondes et t2 de 5 à 180 secondes.

6. Procédé selon la revendication 1 ou 2, dans lequel l'électrolyse sélective d'au moins une partie de l'agent anti-nitreux dans le compartiment anodique entraînant une formation d'un dépôt sur une/des électrode/s de ce/ces compartiment/s, l'électrolyse est effectuée par cycles successifs comprenant chacun une première étape d'électrolyse à une densité de courant J1 pendant une durée T1, et une deuxième étape d'électrolyse à une densité de courant J2 pendant une durée T2, la densité de courant J1 étant choisie de manière à oxyder sélectivement l'agent anti-nitreux, la densité de courant J2 étant égal à -J1 et T1 supérieur ou égal à t2.

7. Procédé selon la revendication 6, dans lequel T1 a une valeur choisie dans l'intervalle allant de 20 à 1200 secondes et T2 a une valeur choisie dans l'intervalle allant de 5 à 180 secondes.

8. Procédé selon la revendication 6 ou 7 dans lequel une densité de courant JC1 est imposée à la cathode pendant la durée T1, et une densité de courant JC2 pendant la durée T2, avec JC1=-J1 et JC2=-J2.

9. Procédé selon l'une quelconque des revendications 6, 7 ou 8, dans lequel J1 a une valeur choisie dans l'intervalle allant de 1 à 1000 mA/cm².

10. Procédé selon l'une quelconque des revendications précédentes, dans lequel une fraction de la deuxième solution est réinjectée dans le compartiment cathodique à la solution d'acide nitrique concentrée à électrolyser.

11. Procédé selon l'une quelconque des revendications précédentes, dans lequel l'agent anti-nitreux est un composé choisi dans le groupe comprenant de l'hydrazine, de l'hydroxylamine, de l'urée, un dérivé de ces composés ou un mélange de ces composés dérivés ou non.

12. Procédé selon l'une quelconque des revendications précédentes, dans lequel l'actinide est choisi dans le groupe comprenant de l'uranium, du neptunium, du plutonium ou un mélange de ceux-ci.

13. Procédé selon l'une quelconque des revendications précédentes, dans lequel les électrodes des compartiments anodique et cathodique sont constituées d'un métal choisi dans le groupe comprenant le platine, un alliage de platine-iridium ou un alliage platine-rhodium.

14. Procédé selon l'une quelconque des revendications précédentes, dans lequel le séparateur est de nature minérale ou organique.

15. Procédé selon l'une quelconque des revendications précédentes, dans lequel l'oxydation de l'agent anti-nitreux dans le/s compartiment/s anodique/s et l'oxydation de l'acide nitrique dans le compartiment cathodique conduisant à la formation de produits gazeux, l'électrolyseur est ventilé de manière à extraire ces produits gazeux dudit électrolyseur.

16. Procédé selon la revendication 15, dans lequel les gaz extraits du/des compartiment/s cathodique/s sont réinjectés dans la solution d'acide nitrique du/des compartiment/s cathodique/s ou dans le mélange de la première et de la deuxième solutions de manière à catalyser la formation d'acide nitreux.

17. Dispositif d'oxydation d'au moins un actinide stabilisé sous forme réduite par un ou plusieurs agents anti-nitreux, en solution nitrique concentrée comprenant :
un électrolyseur comprenant au moins un compartiment anodique et au moins un compartiment cathodique, chaque compartiment anodique étant isolé de chaque compartiment cathodique correspondant au moyen d'un séparateur, ledit dispositif comprenant en outre des moyens pour alimenter chaque compartiment anodique de l'électrolyseur avec une solution nitrique concentrée d'actinide/s stabilisé/s, des moyens pour alimenter chaque compartiment cathodique de l'électrolyseur avec une solution d'acide nitrique concentrée, ledit dispositif étant **caractérisé en ce qu'**il comprend en outre des moyens pour prélever lesdites solutions à partir de chacun de ces compartiments, et au moins un moyen mélangeur pour mélanger ensemble lesdites solutions prélevées.

18. Dispositif selon la revendication 17 comprenant en outre des moyens pour réinjecter une fraction de la solution prélevée à partir du compartiment cathodique dans le compartiment cathodique.

19. Dispositif selon la revendication 18 comprenant en outre des moyens pour ventiler les gaz produits dans le/s compartiment/s anodique/s et cathodique/s de l'électrolyseur au cours de l'électrolyse.

20. Dispositif selon la revendication 19 comprenant en outre des moyens pour récupérer les gaz ventilés issus du/des compartiment/s cathodique/s et les conduire dans le mélangeur.

21. Dispositif selon l'une quelconque des revendications 17 à 20 dans lequel le séparateur est constitué d'un matériau minéral ou organique ne permettant qu'un transport d'un courant électrique.

## Patentansprüche

1. Verfahren zur Oxidation eines oder mehrerer Actiniden, die durch ein oder mehrere Antinitriermittel (Nitrid-hemmende Agentien) stabilisiert sind, die/das in einer konzentrierten Salpetersäure-Lösung vorliegt/vorliegen, wobei das Verfahren Stufen umfasst, die darin bestehen, dass man:
- die wässrige Salpetersäure-Lösung eines oder mehrerer Actiniden in mindestens einem Anodenabteil eines Elektrolyseurs einer Elektrolyse unterwirft in der Weise, dass mindestens ein Teil des Antinitriermittels (Nitrid-hemmenden Agens) dieser Lösung selektiv oxidiert wird unter Bildung einer ersten Lösung,
- eine konzentrierte Salpetersäure-Lösung in mindestens einem Kathodenabteil des genannten Elektrolyseurs einer Elektrolyse unterwirft in der Weise, dass in dieser Lösung Salpetrige Säure gebildet wird unter Bildung einer zweiten Lösung, und dann
- die genannte erste Lösung und die genannte zweite Lösung unter Verwendung eines Mischers miteinander vermischt,
wobei jedes Anodenabteil mittels eines Separators gegenüber jedem entsprechenden Kathodenabteil isoliert ist.

2. Verfahren nach Anspruch 1, in dem die Elektrolyse der Salpetersäure-Lösung des einen oder der mehreren Actiniden, die Elektrolyse der konzentrierten Salpetersäure-Lösung und das Vermischen der ersten Lösung mit der zweiten Lösung kontinuierlich durchgeführt werden, indem man die Salpetersäure-Lösung des einen oder der mehreren Actiniden bzw. die konzentrierte Salpetersäure-Lösung kontinuierlich in das/die Anodenabteil/e und Kathodenabteil/e einführt, und dass man aus dem/den Anodenabteil/en und Kathodenabteil/en die erste Lösung bzw. die zweite Lösung kontinuierlich entnimmt, um sie kontinuierlich miteinander vermischen zu können.

3. Verfahren nach Anspruch 1 oder 2, bei dem die selektive Elektrolyse mindestens eines Teils des Antinitriermittels (Nitrid-hemmenden Agens) in dem Anodenabteil zur Bildung einer Ablagerung auf einer oder mehreren Elektroden dieses/dieser Abteils/Abteile führt, man die Elektrolyse durch aufeinanderfolgende Zyklen durchführt, die jeweils eine erste Elektrolysestufe bei einem Potential E1 während einer Dauer von t1 und eine zweite Elektrolysestufe bei einem Potential E2 während einer Dauer von t2 umfassen, wobei das Potential E1 so ausgewählt wird, dass es das Antinitriermittel (Nitrid-hemmende Agens) selektiv oxidiert, und das Potential E2 so ausgewählt wird, dass es die Ablagerung auf der/den Elektrode/en verhindert und dass t1 ≥ t2 ist.

4. Verfahren nach Anspruch 3, in dem E1 einen Wert hat, der ausgewählt wird aus dem Intervall zwischen 0 und 2 V und E2 einen Wert hat, der ausgewählt wird aus dem Intervall zwischen 0 und -2 V, bezogen auf eine gesättigte Kalomel-Referenzelektrode.

5. Verfahren nach Anspruch 3 oder 4, in dem t1 20 bis 1200 s beträgt und t2 5 bis 180 s beträgt.

6. Verfahren nach Anspruch 1 oder 2, in dem die selektive Elektrolyse mindestens eines Teils des Antinitriermittels (Nitrid-hemmenden Agens) in dem Anodenabteil zur Bildung einer Ablagerung auf einer/den Elektrode/n dieses/dieser Abteils/Abteile führt, man die Elektrolyse durch aufeinanderfolgende Zyklen durchführt, die jeweils eine erste Elektrolysestufe bei einer Stromdichte J1 für eine Dauer von T1 und eine zweite Elektrolysestufe bei einer Stromdichte J2 für eine Dauer von T2 umfassen, wobei die Stromdichte J1 so ausgewählt wird, dass das Antinitriermittel (Nitrid-hemmende Agens) selektiv oxidiert wird, wobei die Stromdichte J2 dann -J1 beträgt und T1 ≥ T2.

7. Verfahren nach Anspruch 6, in dem T1 einen Wert hat, der ausgewählt wird aus dem Intervall zwischen 20 und 1200 s, und T2 einen Wert hat, der ausgewählt wird aus dem Intervall zwischen 5 und 180 s.

8. Verfahren nach Anspruch 6 oder 7, in dem an die Kathode während der Dauer T1 eine Stromdichte JC1 angelegt wird und während der Dauer T2 eine Stromdichte JC2 angelegt wird, wobei JC1 = -J1 und JC2 = -J2.

9. Verfahren nach einem der Ansprüche 6, 7 oder 8 in dem J1 einen Wert hat, der ausgewählt wird aus dem Intervall zwischen 1 und 1000 mA/cm².

10. Verfahren nach einem der vorhergehenden Ansprüche, bei dem ein Bruchteil der zweiten Lösung in das Kathodenabteil zu der zu elektrolysierenden konzentrierten Salpetersäure-Lösung wieder injiziert wird.

11. Verfahren nach einem der vorhergehenden Ansprüche, in dem das Antinitriermittel (Nitrid-hemmende Agens) eine Verbindung ist, die ausgewählt wird aus der Gruppe, die umfasst Hydrazin, Hydroxylamin, Harnstoff, ein Derivat dieser Verbindungen oder eine Mischung dieser Verbindungen oder Verbindungsderivate.

12. Verfahren nach einem der vorhergehenden Ansprüche, bei dem das Actiniden-Element ausgewählt wird aus der Gruppe, die umfasst Uran, Neptunium, Plutonium oder eine Mischung davon.

13. Verfahren nach einem der vorhergehenden Ansprüche, bei dem die Elektroden der Anoden- und Kathoden-Abteile aus einem Metall bestehen, das ausgewählt wird aus der Gruppe, die umfasst Platin, eine Platin-Iridium-Legierung oder eine Platin-Rhodium-Legierung.

14. Verfahren nach einem der vorhergehenden Ansprüche, bei dem der Separator mineralischer oder organischer Natur ist.

15. Verfahren nach einem der vorhergehenden Ansprüche, bei dem die Oxidation des Antinitriermittels (des Nitrid-hemmenden Agens) in dem/den Anodenabteil/en und die Oxidation der Salpetersäure in dem Kathodenabteil zur Bildung von gasförmigen Produkten führen und dass der Elektrolyseur so belüftet wird, dass diese gasförmigen Produkte aus dem Elektrolyseur abgezogen werden.

16. Verfahren nach Anspruch 15, bei dem die aus dem/den Kathodenabteil/en abgezogenen Gase in die Salpetersäure-Lösung des/der Kathodenabteils/Kathodenabteile oder in die Mischung aus der ersten Lösung und der zweiten Lösung wieder so injiziert werden, dass sie die Bildung von Salpetriger Säure katalysieren.

17. Vorrichtung zur Oxidation mindestens eines Actiniden-Elements, das in reduzierter Form durch ein oder mehrere Antinitriermittel (Nitrid-hemmende Agentien) stabilisiert ist, in einer konzentrierten Salpetersäure-Lösung,
wobei die Vorrichtung umfasst:
einen Elektrolyseur, der umfasst mindestens ein Anodenabteil und mindestens ein Kathodenabteil, wobei jedes Anodenabteil gegenüber jedem entsprechenden Kathodenabteil mittels eines Separators isoliert ist, wobei die Vorrichtung außerdem umfasst
Einrichtungen zur Einführung einer konzentrierten Salpetersäure-Lösung von einem oder mehreren stabilisierten Actiniden in jedes Anodenabteil des Elektrolyseurs, Einrichtungen zur Einführung einer konzentrierten Salpetersäure-Lösung in jedes Kathodenabteil des Elektrolyseurs, und
wobei die Vorrichtung **dadurch gekennzeichnet ist, dass** sie außerdem umfasst Einrichtungen zur Entnahme der genannten Lösungen aus jedem dieser Abteile und mindestens eine Mischeinrichtung zum Vermischen der entnommenen Lösungen miteinander.

18. Vorrichtung nach Anspruch 17, die außerdem Einrichtungen zum erneuten Injizieren eines Bruchteils der aus dem Kathodenabteil entnommenen Lösung in das Kathodenabteil umfasst.

19. Vorrichtung nach Anspruch 18, die außerdem Einrichtungen zum Abziehen der in dem/den Anodenabteil/en und in dem/den Kathodenabteil/en der im Verlaufe der Elektrolyse gebildeten Gase umfasst.

20. Vorrichtung nach Anspruch 19, die außerdem Einrichtungen zur Abtrennung (Gewinnung) der aus dem/den Kathodenabteil/en abgezogenen Gase und zur Einführung derselben in den Mischer umfasst.

21. Vorrichtung nach einem der Ansprüche 17 bis 20, in welcher der Separator aus einem mineralischen oder organischen Material besteht, das nur den Transport eines elektrischen Stroms erlaubt.

## Claims

1. Process for the oxidation of one or more actinides, stabilised by one or more anti-nitrous agents, present in a concentrated nitric solution, comprising steps consisting of:
- subjecting the nitric actinide solution to electrolysis in at least one anodic compartment of an electrolyser so as to selectively oxidise at least part of the anti-nitrous agent of this solution to obtain a first solution,
- subjecting a concentrated nitric acid solution to electrolysis in at least one cathodic compartment of said electrolyser so as to form nitrous acid in this solution to obtain a second solution, and
- mixing said first and said second solutions by means of a mixer,
each anodic compartment being separated from each corresponding cathodic compartment by means of a separator.

2. Process according to claim 1, wherein the electrolysis of the nitric actinide solution, the electrolysis of the concentrated nitric acid solution and the mixture of the first and the second solutions are carried out continuously by supplying the anodic and cathodic compartments continuously with the nitric actinide solution and the nitric acid solution, respectively, and continuously removing the first and second solutions from the anodic and cathodic compartments, respectively, so as to be able to mix them together continuously.

3. Process according to claim 1 or 2, wherein, since the selective electrolysis of at least part of the anti-nitrous agent in the anodic compartments results in the formation of deposition on one of the electrodes of the compartments, the electrolysis is carried out by successive cycles, each comprising a first electrolysis step at a potential E1 for a time t1, and a second electrolysis step at a potential E2 for a time t2, the potential E1 being selected so as to oxidize the anti-nitrous agent selectively and the potential E2 being selected so as to eliminate the deposition on the electrodes and t1 greater than or equal to t2.

4. Process according to claim 3, wherein E1 has a value selected in the interval ranging from 0 to 2 V and E2 has a value selected in the interval ranging from 0 to -2 v, with reference to a reference saturated calomel electrode.

5. Process according to claim 3 or 4, wherein t1 is 20 to 1200 seconds and t2 5 to 180 seconds.

6. Process according to claim 1 or 2, wherein, since the selective electrolysis of at least part of the anti-nitrous agent inducing a formation of deposition on one of the electrodes of the compartments, the electrolysis is carried out by successive cycles each comprising a first electrolysis step at a current density J1 for a time T1, and a second electrolysis step at a current density J2 for a time T2, the current density J1 being selected so as to oxidize the anti-nitrous agent selectively, the current density J2 being equal to -J1 and T1 greater than or equal to T2.

7. Process according to claim 6, wherein T1 has a value selected in the interval ranging from 20 to 1200 seconds and T2 has a value selected in the interval ranging from 5 to 180 seconds.

8. Process according to claim 6 or 7, wherein a current density JC1 is applied to the cathode for the time T1, and a current density JC2 is applied to the cathode for the time T2, where JC1 = -J1 and JC2 = -J2.

9. Process according to any of claims 6, 7 or 8, wherein J1 has a value selected in the interval ranging from 1 to 1000 mA/cm².

10. Process according to any of the above claims, wherein a fraction of the second solution is reinjected in the cathodic compartment into the concentrated nitric acid solution to be electrolyzed.

11. Process according to any of the above claims, wherein the anti-nitrous agent is selected from the group comprising hydrazine, hydroxylamine, urea, a derivative of these compounds or a mixture of these compounds, whether derivatives or not.

12. Process according to any of the above claims, wherein the actinide is selected from the group comprising uranium, neptunium, plutonium or a mixture of these elements.

13. Process according to any one of the above claims, wherein the electrodes of the anodic and cathodic compartments are composed of a metal selected from the group comprising platinum, a platinum/iridium alloy or a platinum/rhodium alloy.

14. Process according to any of the above claims, wherein the separator is mineral or organic in nature.

15. Process according to any of the above claims, wherein, since the oxidation of the anti-nitrous agent in the anodic compartments and the oxidation of the nitric acid in the cathodic compartment result in the formation of gaseous products, the electrolyzer is ventilated so as to extract these gaseous products from said electrolyzer.

16. Process according to claim 15, wherein the gases extracted from the cathodic compartments are reinjected into the nitric acid solution of the cathodic compartments or into the mixture of the first and second solutions so as to catalyze the formation of nitrous acid.

17. Device for the oxidation of at least one actinide stabilized in reduced form by one or more anti-nitrous agents, in concentrated nitric solution comprising:
an electrolyzer comprising at least one anodic compartment and at least one cathodic compartment, each anodic compartment being separated from each corresponding cathodic compartment by means of a separator, said device also comprising means to supply each anodic compartment of the electrolyzer with a concentrated stabilized nitric actinide solution, means to supply, continuously or not, each cathodic compartment of the electrolyzer with a concentrated nitric acid solution, said device being **characterized in that** it also comprises means to remove said solutions from each of these compartments, and at least one mixing means to mix said solutions removed together.

18. Device according to claim 17 also comprising means to reinject a fraction of the solution removed from the cathodic compartment into the cathodic compartment.

19. Device according to claim 18 also comprising means to ventilate the gases produced in the anodic and cathodic compartments of the electrolyzer during electrolysis.

20. Device according to claim 19 also comprising means to recover the ventilated gases from the cathodic compartments and convey them to the mixer.

21. Device according to any of claims 17 to 20, wherein the separator is composed of a mineral or organic material only enabling the transport of an electrical current.
